# EUROPEAN PATENT APPLICATION

(11) **EP 4 729 393 A1**
(43) Date of publication of application: **22.04.2026**
(21) Application number: 25208898.4
(22) Date of filing: 15.10.2025
(51) Int. Cl.: B62D 6/00

(54) **STEERING SYSTEM**

(30) Priority: 21.10.2024 JP 2024184825
(71) Applicant: JTEKT CORPORATION, Kariya-shi, Aichi-ken, 448-8652 (JP)
(72) Inventor: MIYAKE, Junya, Kariya-shi, Aichi-ken, 448-8652 (JP); MATSUDA, Satoshi, Kariya-shi, Aichi-ken, 448-8652 (JP); IIDA, Tomoyuki, Toyota-shi, Aichi-ken, 471-8571 (JP)
(74) Representative: Winter, Brandl - Partnerschaft mbB

(57) **Abstract**

A steering system of a steer-by-wire type, provided in a vehicle, includes a turning device (12) configured to turn wheels (FW1,FW2) of the vehicle, a reaction force device (10) configured to apply a reaction force to a steering operation member (20) operable by a driver, and a controller (39,40) configured to control the reaction force. The controller (39,40) is configured to control the reaction force based on a phase-adjusted deviation (Ds), the phase-adjusted deviation being a deviation between an actual steering angle (δm) and a target steering angle (δt), a phase in the phase-adjusted deviation having been adjusted, and the actual steering angle being an actual steering angle of the wheels (FW1,FW2) , the target steering angle being a target value of the steering angle of the wheels (FW1,FW2).

## Description

### TECHNICAL FIELD

The present disclosure relates to a steering system provided in a vehicle.

### BACKGROUND ART

JP 2023-048612A describes a steer-by-wire steering system including a reaction force device and a turning device. In the reaction force device of the steering system, a reaction force motor is controlled such that a target value of an operation torque, which is a reaction force torque, is achieved. Further, the operation torque is obtained based on a steering angle deviation that is a difference between a target steering angle and an actual steering angle, and the target value of the operation torque is determined by performing a phase advance process on the obtained operation torque.

### SUMMARY

It is an object of the present disclosure to provide a reaction force control apparatus and a reaction force control method capable of controlling a reaction force.

An aspect of the present disclosure relates to a steering system of a steer-by-wire type, provided in a vehicle. In the present steering system, the reaction force is controlled based on the phase-adjusted deviation, which is a steering angle deviation, a phase of which h5as been adjusted. As a result of this, it is possible to suppress a delay of the reaction force with respect to a change of the steering angle deviation, and it is possible to quickly transmit a steered state of the wheels to the driver via the reaction force applied to the steering operation member. Moreover, the reaction force control can be performed well.

As described above, in the steering system described in JP 2023-048612A, the operation torque is obtained based on the steering angle deviation, and the target value of the operation torque is determined by performing a phase advance compensation on the obtained operation torque. In contrast, in the steering system according to the present disclosure, the target value of the reaction force is determined based on the phase-adjusted deviation. Since, in the steering system according to the present disclosure, the target value of the reaction force is determined based on the steering angle deviation subjected to the phase adjustment, as compared with the case of the steering system described in JP 2023-048612 A, it is possible to achieve a situation in which a change in the steering angle deviation can be quickly reflected in the target value of the reaction force, and in which a change delay of the target value of the reaction force with respect to the change in the steering angle deviation can be favorably suppressed.

### BRIEF DESCRIPTION OF DRAWINGS

The objects, features, advantages, and technical and industrial significance of the present disclosure will be better understood by reading the following detailed description of an embodiment, when considered in connection with the accompanying drawings, in which;

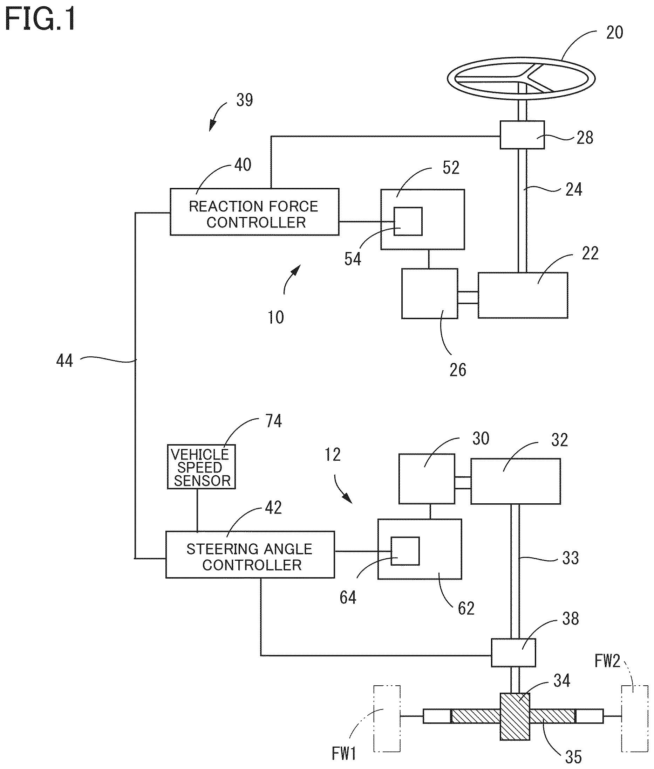

FIG.1 is a diagram conceptually showing a steering system according to an embodiment of the present disclosure;
FIG.2 is a diagram conceptually showing a steering angle controller, which is a main part of the steering system, and a periphery of the steering angle controller;
FIG.3 is a diagram conceptually showing a reaction force controller, which is a part of the steering system, and a periphery of the reaction force controller;
FIG.4 is a diagram conceptually showing a steering-side drive circuit of the steering system.

### DESCRIPTION

Hereinafter, there will be described a steering system according to an embodiment of the present disclosure with reference to the drawings.

The steering system includes a reaction force device 10 and a turning device 12. The reaction force device 10 and the turning device 12 are mechanically independent of each other, in other words, are mechanically disconnected from each other. This steering system is of a steer-by-wire type.

The reaction force device 10 includes a steering operation member 20, a reaction force transmission mechanism 22, a reaction force actuator 26, and the like. The reaction force device 10 transmits a reaction force to a driver via the steering operation member 20. The steering operation member 20 can be operated by the driver, and may be a rotatable steering wheel, a joystick that can reciprocate linearly or curvedly, or the like. In the present embodiment, a rotatable steering wheel is used as the steering operation member 20.

An input shaft 24 is connected to the steering wheel 20, and the reaction force transmission mechanism 22 is provided on the input shaft 24. The reaction force transmission mechanism 22 may include, for example, a plurality of gears. The reaction force actuator 26 is connected to the reaction force transmission mechanism 22. The reaction force actuator 26 includes a reaction force motor, but may include a speed reducer in addition to the reaction force motor. A reaction torque, which is an output torque of the reaction force actuator 26, is transmitted to the input shaft 24 via a plurality of gears, and is transmitted to the steering wheel 20. An operation angle sensor 28 as an operation amount sensor is attached to the input shaft 24. The operation angle sensor 28 detects an operation amount of the steering operation member, that is, an operation amount from a neutral position of the steering operation member. In the present embodiment, the operation angle sensor 28 detects an operation angle which is a rotation angle of the steering wheel 20 from the neutral position.

The turning device 12 turns right and left turning wheels. The left and right steered wheels may be, for example, left and right front wheels FW1 and FW2. In the present embodiment, the turning device 12 is of a rack and pinion type, and includes a steering actuator 30, a steering force transmission mechanism 32, an output shaft 33 that is a steering output shaft, a pinion gear 34, a rack bar 35, and the like. The steering actuator 30 includes a steering motor, but may include a speed reducer in addition to the steering motor. The rack bar 35 is disposed so as to extend in a width direction of the vehicle as an axial direction. The pinion gear 34 is screwed to the rack bar 35.

The steering force transmission mechanism 32 transmits the driving force of the steering actuator 30 to the output shaft 33 so as to rotate the output shaft 33 in accordance with the rotation of the steering actuator 30. The steering force transmission mechanism 32 may include, for example, various kinds of gears (for example, a planetary gear mechanism). The driving force of the steering actuator 30 is transmitted to the turning wheels FW1 and FW2 via the steering force transmission mechanism 32, the output shaft 33, the pinion gear 34, and the rack bar 35. The rack bar 35 is displaced in the axial direction by the rotation of the pinion gear 34, and the turning wheels FW1 and FW2 are turned to the left and right according to the displacement of the rack bar 35 in the axial direction. A steering angle sensor 38 is attached to the output shaft 33. The steering angle sensor 38 detects a rotation angle of the output shaft 33 from a neutral position of the output shaft 33. An actual steering angle δm, which is the actual steering angle of the left and right turning wheels FW1 and FW2, can be obtained based on the rotation angle of the output shaft 33.

The steering angle sensor 38 may detect the amount of displacement of the rack bar 35 from the neutral position of the rack bar 35. The neutral position is a position at the timing when the vehicle travels in a straight line.

Further, in the steering force transmission mechanism 32, by appropriately changing the meshing modes of the various kinds of gears, the rotation transmitted from the steering actuator 30 can be appropriately decelerated and transmitted to the output shaft 33. This makes it possible to continuously change the steering gear ratio at the timing when the turning wheels FW1 and FW2 are turned. The steering gear ratio is a transmission ratio of the operation angle of the steering wheel 20 to the turning wheels (the steering angle / the operation angle).

The steering system includes a controller 39 mainly composed of a computer. The controller 39 includes a reaction force controller 40, a steering angle controller 42, and the like. The reaction force controller 40 and the steering angle controller 42 are communicably connected to each other via an L-CAN (Local Controller Area Network) 44 as a communication unit.

The reaction force controller 40 controls the reaction force actuator 26. The reaction force actuator 26 is connected to the reaction force controller 40 via a drive circuit 52, which may be referred to as an operation-side drive circuit, and the operation angle sensor 28, a current sensor 54, and the like are also connected to reaction force controller 40. The current sensor 54 is provided in the drive circuit 52 and detects a current flowing through the reaction force actuator 26. The reaction force actuator 26 is controlled such that a reaction force torque (an operation torque) corresponding to the reaction force applied to the steering wheel 20 approaches a target value of the operation torque. Hereinafter, the target value of the operation torque is referred to as a target operation torque.

The steering angle controller 42 controls the steering actuator 30. The steering actuator 30 is connected to the steering angle controller 42 via a steering-side drive circuit 62 that is a drive circuit, and the steering angle sensor 38, a current sensor 64, a vehicle speed sensor 74, and the like are connected to the steering angle controller 42. The current sensor 64 detects an actual current that is a current flowing through the steering actuator 30. The vehicle speed sensor 74 detects the traveling speed of the vehicle. The steering actuator 30 is controlled such that the actual steering angle δm of the turning wheels FW1 and FW2 approaches a turning target steering angle δt that is a target value of the steering angle. The turning target steering angle δt is a target steering angle in a turning control of the turning wheels FW1 and FW2, and can also be referred to as the turning control target steering angle δt. The turning target steering angle δt will be described below.

The operation angle and the steering angle are represented by a positive value for one side from the neutral position of the rotation angles in the left-right direction, a negative value for the other side from the neutral position of the rotation angles in the left-right direction, or "0" as the neutral position.

In the present steering system, a steered state of the turning wheels FW1 and FW2 is transmitted as a reaction force to the driver via the steering wheel 20. The steered state of the turning wheels FW1 and FW2 is determined by a state of the turning wheels FW1 and FW2, a state of the turning device 12, and the like. The states of the turning wheels FW1 and FW2 include a state of a road surface with which the turning wheels FW1 and FW2 are in contact, a state of a road, and the like. For example, when a friction coefficient of the road surface with which the turning wheels FW1 and FW2 are in contact is low, none of the turning wheels FW1 and FW2 is in contact with an obstacle such as a curb, and the turning device 12 is normal, the actual steering angle δm is considered to satisfactorily follow the turning target steering angle δt. This is because the turning wheels FW1 and FW2 are more easily turned when the friction coefficient is low than when the friction coefficient is high. In this case, a steering control deviation Da, which is a deviation between the actual steering angle δm and the turning target steering angle δt, is considered to be small. Therefore, it is considered that the necessity of applying a large reaction force in order to notify the driver of the steered state of the turning wheels FW1 and FW2 is low. In the following description, a state in which the actual steering angle δm satisfactorily follows the turning target steering angle δt may be simply referred to as good followability.

In contrast, for example, when the friction coefficient of the road surface with which the turning wheels FW1 and FW2 are in contact is high, it is considered that the turning wheels FW1 and FW2 are difficult to turn following the turning target steering angle δt. In addition, when at least one of the turning wheels FW1 and FW2 hits an obstacle such as a curb, it is considered that the turning wheels FW1 and FW2 are difficult to turn following the turning target steering angle δt even when the turning device 12 is in an abnormal state and there is an abnormality in the control of the steering angle. In these cases, the followability is poor, and the steering control deviation Da tends to be large. Therefore, it is desirable to apply a large reaction force in order to inform the driver of the steered state of the turning wheels FW1 and FW2.

In the conventional steering system, an operation angle conversion value, which is a value obtained by converting the actual steering angle δm, which is a steering angle detected by the steering angle sensor 38, into an operation angle, is obtained, and an operation-side deviation, which is a difference between the operation angle detected by the operation angle sensor 28 and the operation angle conversion value, is obtained. Then, the target operation torque is obtained in accordance with the steering-side deviation, and the reaction force actuator 26 is controlled. Therefore, the steered state of the turning wheels FW1 and FW2 can be favorably transmitted to the driver. However, since the process for obtaining the operation angle conversion value is complicated, it has been desired to perform the reaction force control without using the operation angle conversion value.

In contrast, it is conceivable that the target operation torque is obtained based on the steering control deviation Da, and the reaction force control is performed based on the obtained target operation torque. However, the reaction force is delayed with respect to the operation of the steering wheel 20 by the driver, and it is difficult to promptly transmit the steered state of the turning wheels FW1 and FW2 to the driver.

That is, the steering angle controller 42 obtains the turning target steering angle δt based on a control operation angle θ obtained by the reaction force controller 40, and controls the steering actuator 30 based on the obtained turning target steering angle δt, as a result, the turning wheels FW1 and FW2 turn. Therefore, the deviation between the turning target steering angle δt and the actual steering angle δm detected by the steering angle sensor 38 is usually delayed with respect to the operation of the steering wheel 20. As described above, when the control of the reaction force actuator 26 based on the steering control deviation Da is delayed with respect to the operation of the steering wheel 20, it is difficult to favorably (quickly) transmit the steered state of the turning wheels FW1 and FW2 to the driver.

Therefore, in the present embodiment, the target operation torque is determined based on a, which is a steering angle deviation, the phase of which has been adjusted, and the reaction force actuator 26 is controlled based on the determined phase-adjusted deviation Ds. As a result, the delay can be suppressed, and the steered state of the turning wheels FW1 and FW2 can be promptly transmitted to the driver via the steering wheel 20. In the present embodiment, the phase adjustment mainly refers to adjustment for suppressing a delay. For example, the phase adjustment refers to advancing the phase, performing phase advance compensation, considering a differential value, and the like. The control of the reaction force actuator 26 by obtaining the phase-adjusted deviation Ds and determining the target operation torque as described above is referred to as a deviation compensation control. It is noted that obtaining the phase-adjusted deviation Ds to obtain the target operation torque can also be referred to as the deviation compensation control.

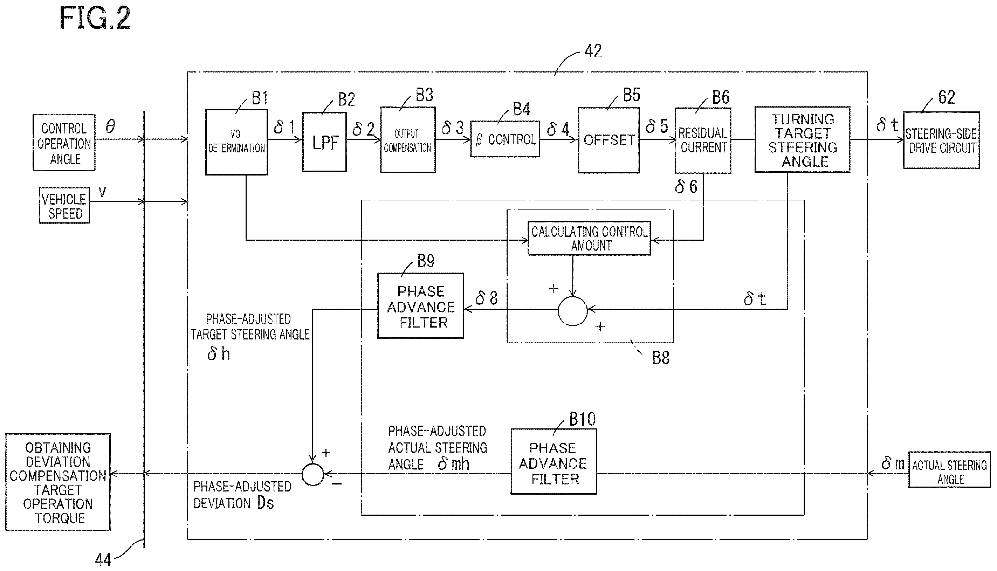

Hereinafter, there will be described the deviation compensation control with reference to FIGS. 2 to 4.

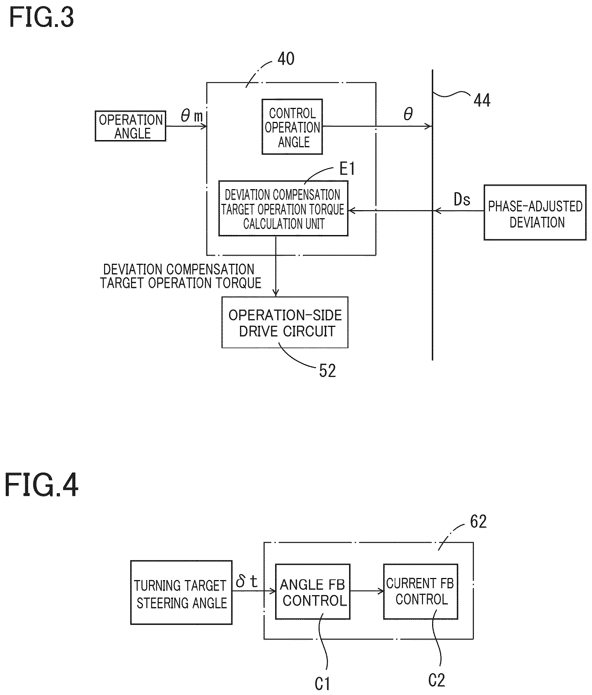

As shown in FIG.3, an operation angle θm detected by the operation angle sensor 28 and the like are input to the reaction force controller 40, and the control operation angle θ is obtained based on the detected operation angle θm. For example, the operation angle θm detected by the operation angle sensor 28 may be subjected to output limitation to obtain the control operation angle θ. The output limitation may be, for example, suppression of a sudden change in the detected operation angle θm or removal of an abnormal value. The control operation angle θ is supplied to the steering angle controller 42 via the L-CAN44.

As shown in FIG.2, the steering angle controller 42 receives the control operation angle θ, the vehicle speed v, the actual steering angle δm, and the like. In the steering angle controller 42, the turning target steering angle δt, which is a target steering angle used for steering angle control for the turning wheels FW1 and FW2, is obtained based on the control operation angle θ, the vehicle speed v, and the like, and the steering actuator 30 is controlled based on the turning target steering angle δt.

In the steering angle controller 42, a phase-adjusted target steering angle δh is obtained by performing the phase adjustment on the turning target steering angle δt, and a phase-adjusted actual steering angle δmh is obtained by performing the phase adjustment on the actual steering angle δm. The phase-adjusted deviation Ds is obtained based on the phase-adjusted target steering angle δh and the phase-adjusted actual steering angle δmh. The phase-adjusted deviation Ds is an example of a phase-adjusted deviation that is a steering angle deviation, the phase of which has been adjusted. The phase-adjusted deviation Ds is supplied to the reaction force controller 40.

In a VG (Variable gear ratio) determination B1, a steering gear ratio is obtained based on the vehicle speed v, and the target steering angle is provisionally obtained based on the control operation angle θ and the steering gear ratio. The VG determination B1 is referred to as a process B1, and the target steering angle temporarily obtained in the process B1 is referred to as a first provisional target steering angle δ1.

For example, the steering gear ratio is obtained such that the turning wheels FW1 and FW2 are steered quickly when the vehicle speed v is low and are steered slowly when the vehicle speed v is high. For example, the steering gear ratio can be set to a larger value when the vehicle speed v is low than when the vehicle speed v is high. Moreover, the steering gear ratio is set such that a sudden change in the steering angle due to a change in the vehicle speed v is suppressed.

In a LPF process B2, a cutoff frequency is obtained based on at least one of the vehicle speed v and the control operation angle θ, and an LPF (Low Pass Filter) process determined by the cutoff frequency is performed on the first provisional target steering angle δ1. The value produced by the LPF process is referred to as a second provisional target steering angle δ2. The cutoff frequency is obtained based on at least one of the vehicle speed v and the control operation angle θ. For example, the cutoff frequency is set lower when the vehicle speed v is high than when the vehicle speed v is low, and the cutoff frequency is set lower when the absolute value of the control operation angle θ is large than when the absolute value of the control operation angle θ is small.

In an output compensation B3, a third provisional target steering angle δ3 is obtained by limiting the output of the second provisional target steering angle δ2. For example, when the absolute value of the control operation angle θ increases while the vehicle is stopped (steering while stationary), it may be difficult for the turning device 12 to achieve the target steering angle obtained for the operation angle. Therefore, when the absolute value of the operation angle becomes larger than a set value while the vehicle is stopped, the target steering angle is limited. For example, the absolute value of the target steering angle may be limited to a value corresponding to the set value of the steering angle, or a value calculated by multiplying the target steering angle by a set ratio γ which is smaller than 1. It is noted that there is little need to limit the target steering angle while the vehicle is traveling. Therefore, in the output compensation B3, the target steering angle is adjusted such that a change in the target steering angle between when the vehicle is stopped and when the vehicle is traveling is reduced.

In a β control B4 (process B4), the third provisional target steering angle δ3 is corrected based on the difference between the operation angle and a traveling direction of the vehicle, and a fourth provisional target steering angle δ4 is obtained based on the corrected third provisional target steering angle δ3. For example, when braking on a split-µ road is performed, the operation angle is substantially zero, and the vehicle turns to the high µ road side due to the difference between the left and right road surface µ values even if the driver desires to travel straight. Therefore, it is desirable to steer the turning wheels to the low µ side. In consideration of this, the third provisional target steering angle δ3 is corrected. Moreover, the same applies to the case where the driver applies counter-steer when the vehicle is in the oversteer state.

In an offset process B5, a sudden change in the fourth provisional target steering angle δ4 is suppressed, and a fifth provisional target steering angle δ5 is obtained. For example, when the change in the fourth provisional target steering angle δ4 becomes large, the fifth provisional target steering angle δ5 is determined to be the value before the sudden change (the previous value), and then determined such that the difference between the current value and the previous value gradually decreases.

In a residual current reduction process B6, the residual current reduction process is performed on the fifth provisional target steering angle δ5, and a sixth provisional target steering angle δ6 is obtained. For example, even when the driver stops the operation of the steering wheel 20 and releases his/her hand from the steering wheel 20, a current is supplied to the steering actuator 30 in a case where the steering control deviation Da is not 0. In order to suppress this, for example, when it is determined that the vehicle is in the stopped state and in the hands-off state, the sixth provisional target steering angle δ6 is obtained such that the current to the steering actuator 30 is reduced. For example, the turning target steering angle δt, which is the sixth provisional target steering angle δ6, is obtained by correcting the fifth provisional target steering angle δ5 to a value closer to the actual steering angle, and is output to the steering-side drive circuit 62.

As shown in FIG.4, an angle FB control C1 and a current FB control C2 are executed in the steering-side drive circuit 62. In the angle FB control C1, a target turning torque, which is an output of the steering actuator 30 such that the actual steering angle δm approaches the turning target steering angle δt, is determined and output to the current FB controller C2. In the current FB controller C2, the target current to the steering actuator 30 is determined such that the target turning torque is output, and the steering actuator 30 is controlled such that the actual current approaches the target current. The actual steering angle δm of the turning wheels FW1 and FW2 is detected by the steering angle sensor 38 and supplied to the steering angle controller 42.

On the other hand, the steering angle controller 42 performs phase adjustment on the turning target steering angle δt and the actual steering angle δm. The phase adjustment includes a process of advancing the phase, a process of suppressing a delay, and the like. The phase adjustment may be referred to as phase advance compensation. In the present embodiment, a delay suppression process B8 and a phase advance filter processes B9 and B10 are executed.

The delay suppression process B8 is a process for suppressing a delay of the turning target steering angle δt with respect to the control operation angle θ. This delay is considered to occur due to the execution of the processes B1 to B6. Then, the control amount (represented by the steering angle) corresponding to the delay caused by the execution of the processes B1 to B6 is obtained, and the turning target steering angle δt is corrected based on the obtained control amount and the like. The corrected target steering angle δt is referred to as a corrected target steering angle δ8.

In the delay suppression process B8, for example, a delay amount of the target steering angle may be obtained based on two or more of the first provisional target steering angle δ1 to the sixth provisional target steering angle δ6 output from each of the processes B1 to B6, and the turning target steering angle δt may be corrected based on a control amount corresponding to the delay amount. Specifically, the control amount is obtained based on the difference between the first provisional target steering angle δ1 and the sixth provisional target steering angle δ6 or the like, and the corrected target steering angle δ8 can be obtained by performing calculation such as adding the control amount to the turning target steering angle δt.

Among the processes B1 to B6, most of the delay occurs in the LPF process B2. Therefore, the control amount can be obtained based on the difference between the first provisional target steering angle δ1 and the second provisional target steering angle δ2 or the like, and the turning target steering angle δt can be corrected. Specifically, the corrected target steering angle δ8 can be obtained by adding the difference between the first provisional target steering angle δ1 and the second provisional target steering angle δ2 to the turning target steering angle δt.

Besides the LPF process B2, there is a case where a process Bx that is executed before the turning target steering angle δt is obtained and increases the delay is performed. In this case, the control amount can be obtained based on a difference between (i) a value after the processes B2 and Bx, which increase the delay, are performed and (ii) a value before the processes B2 and Bx are performed.

The phase-adjusted target steering angle δh is obtained by performing the phase-advance filter process B9 on the corrected target steering angle δ8 to obtain. The phase advance filter process B9 is a process for suppressing a communication delay. The turning device 12 and the reaction force device 10 are connected via an L-CAN44. The phase advance filter is designed based on the communication delay (a delay angle) between them. The phase-adjusted target steering angle δh can be matched with the phase of the control operation angle θ.

In the present embodiment, the phase adjustment is also performed for the actual steering angle δm. The actual steering angle δm is processed in the phase advance filtering process B10, and the phase-adjusted actual steering angle δmh is obtained. The phase advance filter in the phase advance filter process B10 is designed based on the communication delay as in the case described above.

As described above, the processes of B8, B9, and B10 can be collectively referred to as phase adjustment or phase advance compensation, or one or more of the processes of B8, B9, and B10 can be referred to as phase adjustment or phase advance compensation.

Then, a difference between the phase-adjusted actual steering angle δmh and the phase-adjusted target steering angle δh is set as the phase-adjusted deviation Ds as a steering angle deviation. The phase-adjusted deviation Ds is supplied to the reaction force device 10 via the L-CAN44. In a deviation compensation target operation torque calculation unit E1 of the reaction force controller 40, a target operation torque, which is a target value of the reaction force torque, is obtained based on the phase-adjusted deviation Ds. The absolute value of the target operation torque is determined to be larger when the absolute value of the phase-adjusted deviation Ds is large than when the absolute value of the phase-adjusted deviation Ds is small. As shown in FIG.3, the obtained target operation torque is output to the operation-side drive circuit 52. The target operation torque can be referred to as a deviation compensation target operation torque.

Thus, in the present embodiment, the target operation torque is determined based on the phase-adjusted deviation Ds. Therefore, a change delay of the target operation torque with respect to a change in the steering angle deviation can be satisfactorily suppressed, and the steered state of the turning wheels FW1 and FW2 can be satisfactorily transmitted to the driver as the reaction torque. When the turning wheels FW1 and FW2 follow the turning target steering angle δt determined by the operation angle of the steering wheel 20, the driver can obtain a normal (light and responsive) steering feeling. On the other hand, when the turning wheels FW1 and FW2 do not follow the turning target steering angle δt, the steered state of the turning wheels FW1 and FW2 can be quickly transmitted to the driver via the reaction force applied to the steering wheel 20.

It is noted that, in an autonomous driving state, it is not necessary to transmit the steered state to the driver. This is because the steering wheel 20 is not operated by the driver. Therefore, it is considered that the necessity of performing the deviation compensation control is low in the autonomous driving state.

In the above embodiment, the phase-adjusted target steering angle δh is obtained by performing the delay suppression process B8 and the phase advance filter process B9 on the turning target steering angle δt, and the phase-adjusted deviation Ds is obtained by obtaining the phase-adjusted actual steering angle δmh by performing the phase advance filter process B10 on the actual steering angle δm. However, it is not always necessary to execute all the processes of B8, B9, and B10, and at least one of the processes of B8, B9, and B10 may be executed.

Alternatively, the steering control deviation Da, which is the difference between the turning target steering angle δt and the actual steering angle δm, may be obtained, and the phase-adjusted deviation may be obtained by performing phase adjustment for suppressing a delay on the steering control deviation Da.

Further, the deviation compensation control may be executed when the steering control deviation Da is larger than a predetermined threshold value Dath. This is because the effect of the reaction force control based on the phase-adjusted deviation Ds can be greatly enjoyed when the followability is poor.

The controller 39 may be configured such that the reaction force controller 40 and the steering angle controller 42 are integrally provided. In other words, the reaction force control and the steering angle control can be executed in the same controller. In this case, the phase advance filtering processes B9 and B10 are not indispensable. By executing the delay suppression process B8, it is possible to suppress the delay of the turning target steering angle δt with respect to the operation of the steering wheel 20.

The structures of the reaction force device 10 and the turning device 12 are not limited. For example, in the reaction force device 10, the operation angle sensor 28 may detect the operation angle of the steering wheel based on a rotation angle of the reaction force actuator. Further, a torque sensor may be provided on the input shaft 24, and the operation angle may be detected based on an output value of the torque sensor. In the turning device 12, rotation of the steering actuator can be converted into linear movement of a steering shaft via a belt, a pulley, and a ball screw. Similarly, the steering angle sensor 38 may detect the steering angle based on the rotation angle of the steering actuator.

Furthermore, the logic for determining the turning target steering angle δt is not limited to the above described embodiment.

In addition, the present invention can be implemented with various modifications and improvements based on the knowledge of those skilled in the art.

The scope of the following claimable disclosure is to be accorded the broadest interpretation so as to encompass all such modifications and equivalent structures and functions.
(1) A steering system of a steer-by-wire type, provided in a vehicle, comprising: a turning device configured to turn wheels of the vehicle, a reaction force device configured to apply a reaction force to a steering operation member operable by a driver, a controller configured to control the reaction force, wherein the controller is configured to control the reaction force based on a phase-adjusted deviation, the phase-adjusted deviation being a deviation between an actual steering angle and a target steering angle, a phase in the phase-adjusted deviation having been adjusted, and the actual steering angle being an actual steering angle of the wheels, the target steering angle being a target value of the steering angle of the wheels.
   The phase-adjusted deviation can be, for example, a deviation obtained by performing phase adjustment on at least one of the actual steering angle and the target steering angle and obtaining the deviation obtained based on the at least one of the phase-adjusted actual steering angle and the phase-adjusted target steering angle. Moreover, the phase-adjusted deviation may be a value obtained by performing phase adjustment on the deviation between the actual steering angle before the phase adjustment and the target steering angle before the phase adjustment.
(2) The steering system according to mode (1), wherein the controller is configured to obtain the phase-adjusted deviation in which a phase in the target steering angle is adjusted so as to be in conformity to a phase of an operation of the steering operation member.
   The phase of the operation corresponds to a phase of an operation angle which is a rotation angle from a neutral position in a case where the steering operation member is a rotary type such as a steering wheel. In a case where the steering operation member is a member such as a joystick that reciprocates generally linearly or curvedly, the displacement from the neutral position corresponds to the phase.
(3) The steering system according to mode (1) or mode (2), wherein the controller includes: a steering-angle controller configured to control steering angles of the wheels by controlling the turning device; and a reaction-force controller configured to control the reaction force by controlling the reaction force device, wherein the steering-angle controller and the reaction-force controller are connected to each other via a connector so as to be communicatable, and wherein the controller is configured to obtain the phase-adjusted deviation in which a phase-lead process is performed based on a communication delay through the connector.
   For example, it is possible to design the phase advance filter based on the phase angle of the communication delay in the connector.
(4) The steering system according to any one of mode (1) or mode (2), wherein the controller is configured to obtain: a turning target steering angle by performing one or more processes on an operation amount of the steering operation member, the turning target steering angle being the target steering angle; and the phase-adjusted deviation by obtaining a phase-adjusted target steering angle by performing phase adjustment on the turning target steering angle based on a delay generated in one or more of the one or more processes.

For example, in the turning controller, the target steering angle may be obtained by performing one or more processes on the operation amount of the steering operation member, and in the controller, the phase-adjusted target steering angle, which is the target steering angle, may be obtained by performing the phase adjustment based on a delay occurring in one or more of the one or more processes, and the phase-adjusted deviation may be obtained based on the phase-adjusted target steering angle.

## Claims

1. A steering system of a steer-by-wire type, provided in a vehicle, comprising:
a turning device (12) configured to turn wheels (FW1,FW2) of the vehicle,
a reaction force device (10) configured to apply a reaction force to a steering operation member (20) operable by a driver, and
a controller (39,40) configured to control the reaction force,
wherein the controller (39,40) is configured to control the reaction force based on a phase-adjusted deviation (Ds), the phase-adjusted deviation being a deviation between an actual steering angle (δm) and a target steering angle (δt), a phase in the phase-adjusted deviation having been adjusted, and the actual steering angle being an actual steering angle of the wheels (FW1,FW2) , the target steering angle being a target value of the steering angle of the wheels (FW1,FW2).

2. The steering system according to claim 1,
wherein the controller (39,40) is configured to obtain the phase-adjusted deviation (Ds) in which a phase in the target steering angle (δt) is adjusted so as to be in conformity to a phase of an operation of the steering operation member(20).

3. The steering system according to any one of claim 1 or 2,
wherein the controller (39,40) includes:
a steering-angle controller (42) configured to control steering angles of the wheels (FW1,FW2) by controlling the turning device (12), and
a reaction-force controller (40) configured to control the reaction force by controlling the reaction force device (10),
wherein the steering-angle controller (42) and the reaction-force controller (40) are connected to each other via a connector (44) so as to be communicatable, and
wherein the controller (39,40) is configured to obtain the phase-adjusted deviation (Ds) in which a phase-lead process (B9,B10) is performed based on a communication delay through the connector (44).

4. The steering system according to claim 1 or 2,
wherein the controller (39,40) is configured to obtain:
a turning target steering angle (δt) by performing one or more processes on an operation amount of the steering operation member (20), the turning target steering angle being the target steering angle, and
the phase-adjusted deviation (Ds) by obtaining a phase-adjusted target steering angle (δh) by performing phase adjustment on the turning target steering angle (δt) based on a delay generated in one or more of the one or more processes.
